# EUROPEAN PATENT SPECIFICATION

(11) **EP 2 445 999 B1**
(45) Date of publication and mention of the grant of the patent: **02.03.2016**
(21) Application number: 10727659.4
(22) Date of filing: 25.06.2010
(51) Int. Cl.: C10J 3/48, C10J 3/56, C10J 3/84, C10J 3/86

(54) **SYSTEM FOR CLEANING OF AND HEAT RECOVERY FROM HOT GASES**
SYSTEM ZUR REINIGUNG VON UND WÄRMERÜCKGEWINNUNG AUS HEISSGASEN
SYSTEME POUR LE NETTOYAGE ET LA RECUPERATION DE CHALEUR A PARTIR DE GAZ CHAUDS

(30) Priority: 26.06.2009 DK 200900795
(43) Date of publication of application: 02.05.2012
(73) Proprietor: Dall Energy Holding ApS, 3460 Birkerød (DK)
(72) Inventor: BENTZEN, Jens, Dall, DK-3460 Birkerød (DK)
(74) Representative: Plougmann & Vingtoft A/S
(86) International application number: PCT/DK2010/050164
(87) International publication number: WO 2010/149173

(56) References cited:
- EP-A1- 0 976 807
- WO-A1-84/03900
- DE-A1-102005 043 212
- US-A- 2 714 552
- US-A- 4 110 359

## Description

This invention relates inter alia to a method and a system for cleaning of and heat recovery from hot gases, e.g. flue gas, produced in a thermal reactor, or - more specific - using water to cool and clean gases, released by thermal conversion (gasification or combustion) of fuels e.g. biomass, waste, coal, oils, gases or mixtures of these, by having three process steps:
- Removal of contaminants (particles, salts, acids etc.) from gas in a water based scrubber;
- Removal of contaminants of the scrubber water by use of centrifuges and/or hydro cyclones;
- Heat recovery of the energy obtained in the scrubber water.

Furthermore, the invention relates to methods and systems for
- Moisturizing the air for a thermal reactor in two moisturisers
- Removal of particles in the scrubber water
- Recirculation of particles from the scrubber to the fuel system.

In an overall perspective, the invention may be seen as relating to handle particles in water which particles originates from e.g. a flue gas and has due to condensation of water vapours in the gas which occur when the gas is cooled to below the water dew point of the gas. Such approach contains the particles in water but leads to considerations as to how to dispose the water.The present invention seeks to at least mitigate these problems in particularly in relation to a desire that the water needs to be cleaned before being discharged.
Further the invention may be seen as relating to converting solid fuel into gas by moisturizing the air/oxygen used in then thermal reactor as by moisturing the air slagging of ash and formation of NOx is reduced.

### BACKGROUND OF THE INVENTION

The present invention relates in certain aspect to systems and methods to make a clean gas by use of simple and cheap scrubbers and cyclones, and further to recover energy from the hot gas in a very efficient way.

Moisturising of air is known from e.g. WO 2007/036236 (PCT/DK2006/050049) disclosing that heat can be recovered from hot gas produced in a thermal reactor by injecting water into the gas at one or more injection zones in such an amount and in such a way that the gas temperature due to water evaporation is reduced to below 400°C, preferably below 300°C, possibly below 150 - 200°C, and the gas dew point becomes at least 60°C, preferably at least 70°C, possibly 80 or 85°C. The gas can then be led through a condensing heat exchanger unit, where at least some of the gas contents of water vapour are condensed, and the condensing heat can be utilized for heating of a stream of fluid, mainly water.

Furthermore, US 4036606 A discloses a method and apparatus for cleaning gases, especially those generated by the pressurized gasification of coal, to remove impurities therefrom, especially tar, dust and salts, in which the gases are washed with a liquid, preferably water, in a scrubbing unit and the wash liquid is cleaned to yield a major clean liquid stream which is recycled by a circulating means to the scrubbing unit and a minor impurities concentrate stream from which the impurities are removed, in a separator unit. Preferably the wash liquid is cleaned using a plurality of hydrocyclones which may be arranged in series or in parallel. Optionally the liquid recovered from the impurities concentrate stream is returned to the scrubbing unit, although if the quantity of this liquid is equal to the quantity of liquid required for the de-salting of the wash liquid, no recovered liquid is returned to the scrubbing unit.

In addition WO 2008/004070 A1 discloses a method of controlling an apparatus for generating electric power and apparatus for use in said method, the apparatus comprising a gasifier for biomass material, such as waste, wood chips, straw, etc., sais gasifier being of the shaft and updraft fized bed type, which from the top is charged with the raw material for gasification and into the bottom of which gasifying agent is introduced, and a gas engine driving an electrical generator for producing electrical power, sais gas engine being driven by the fuel gas from the gasifier. By supplying the produced fuel gas directly from the gasifier to the gas engine and controlling the production of the fuel gas in the gasifier in order to maintain a constant electrical output power, the necessity of using a gas holder between the gasifier and the gas engine is avoided.

US 4,110,359 discloses a continuous process for simultaneously producing a stream of cleaned purified synthesis gas and a separate stream of CO-rich gas. The fuel is liguid hydrocarbon. The process disclosed comprises cooling the cleaned synthesis gas below the dew point in a heat exchanger and removal of the condensate from the gas in a separation vessel. Upstream of the heat exchanger is a separation vessel which delivers a stream of solid-water dispersion being clarified and recycled to a scrubber and separation vessel.

### THE INVENTION, DEFINITIONS AND ELABORATIONS

The present invention references and makes use of a number of units, methods, concepts and the like. Although these are believed to have been used in a manner being ordinary to a skilled person, some of those are elaborated below.

*Stream of particles* is preferably used to mean a flow of particles. A stream of particles comprise typically but not excluselively a mix of a fluid (gas or liquid) and particles typically being solid particles and the fluid may in such cases be seen as a fluid carrying the particles along. Examples of streams of particles are a water condensate containing particles and produced e.g. from exhaust gas in which cases the fluid is on liguid phase or an exhaust gas containing particles in which case the fluid is on gas phase.

*Stream of water* is typically used to mean a flow of liquid water. The stream of water may contain other constituens than H2O and even contain particles.

*Stream of moisturised air* is typically used to mean a flow of air or oxygen in gas phase that has being moisturised. The stream of moisturised air may contain other constituens than air, oxygen and water and even contain particles.

*Condensate cooler* is typically used to mean a device being adapted to extract energy from a condensate produced by a gas cooler. Examples of condensate coolers applicable in connection with the present invention are heat exchangers such as shell and tube or plate heat exchangers. In some cases can the gas cooler and the condensate cooler be integrated in one unit, where a warm dry gas enter the cooler and a cool gas and a condensate exit the cooler.

*Particle separator* may be referred to as a particle separation system and vice versa. Particle separation system in its broadest scope is used to indicate that a particle separator may comprises a number of elements at different positions in a plant.

Particles such as solid particles and water-soluble particles are transferred from the gas to the water condensate while the gas is cooled below the water dew point. In the particle separation system two fraction of water condensate are produced: One water fraction with a high load of particles and one water fraction with a lower load. The particle separation system can be integrated in one reactor such as the bottom of a scrubber with condensate, where the high load particle stream is collected by gravity in the bottom of the scrubber and the lower load particle stream leave the scrubber at a higher level.

The particle separation system can also consist of several reactors, such as a quench which have a high load of particles in the exit water, followed by a scrubber which have low load of particles in the exit water.

Also separation devices such as hydrocyclones, filters etc. can be used to separate the particle load into a dirty and a clean stream of water.

The dirty stream of water, can be added to the fuel, or it can be used to moisturize the ash or can be cleaned somewhere. The cleaner stream of water can be used for energy purpose such as cooled in a heat exchanger and/or used for moisturizing air for the thermal reactor.

*Energy plants:* Energy plants provide electricity, steam, hot water, cooling for domestic and industrial purposes.

*District heating* / *Hot Water Systems:* The hot water can be used for heating purposes, e.g. in houses, apartment houses, offices, in industries etc. and for domestic water. Installations for such purposes are produced in very different sizes, approx.1 kW-250 MW input effect.

The water is usually heated in a closed circuit and led to a point of consumption, after which the water is returned to the heat production unit after release of the thermal energy. When the water leaves the production unit (supply), the water temperature usually is 60-90°C. The temperature of the water returning to the heat-production unit after cooling at the consumer (return) is about 30-50°C.

With the technological development and the attention to energy savings, there has been a tendency to reduce the supply and return temperatures, as the heat loss from the distribution pipes is reduced in that way.

The hot water can be produced close to the required locations or be sent to the consumer via a district heating network.

*Thermal reactors for solid fuels:* Energy plants are often based on at thermal reactor (combustion or gasification) where fuel is decomposed by reacting with oxygen and thus releasing a hot gas containing N2, CO2 water vapours and in case of combustion 02.

Further smaller amounts of CO, NOx and other gases can be in the hot gas. By use of solid fuels such as coal, wastes, biomass etc. particles and other substances including alkali metals (Na, Ka), Chlorine, Potassium, Silica etc. may be released with the hot gas.

*Two fractions of solids:* Often the main amount of particles is removed from the thermal reactor as bottom ash, and only a smaller fraction is released with the hot gas. This fraction is captured in a filter system, so energy plants using solid fuels normally have at least two fractions of solids to get rid of: Solids from thermal reactor and solids from filter system. Different types of thermal reactors can be used. Most common is moving-bed and Fluid-bed reactors.

*Conversion of solids and volatiles:* Most reactors are originally designed for conversion of coal. Fresh solid fuel such as biomass or wastes has very different properties compared to coal. Especially the content of volatiles and water can be higher in biomass and wastes. In coal, the volatile content is normally below 30%, whereas for biomass and wastes the volatile content is normally above 65% (dry ash free weight basis).

When the volatile content is high in a fuel the conversion process is often divided into two:
- Conversion of the solids
- Conversion of the gas (volatiles)

*Air for thermal reactors for solid fuels:* In a combustion reactor air is often supplied different places:
- Air for conversion of the solids is often named primary air
- Air for conversion of the volatiles is named secondary and tertiary air.
-

Some thermal reactors use moisturised air. Moisturised air give certain advantages in the thermal reactor. For the solid conversion moisturised air results in better gasification properties: (Steam-Carbon reactions) and moisturised air lowers the temperature and hereby prevents ash sintering. For gas combustion moisturised air result in lower NOx and slagging as temperature is reduced.

*Gasifiers*: A gasifier converts solid fuel into a gaseous fuel, which can be used for chemicals and/or used in a power machine such as internal combustion gas engine or turbines. In some cases i.e. internal combustion engines, a cold gas is desired. The colder the gas is the higher is the energy content pr. volume and thus the more power can a given engine produce. The restriction to cool the gas is normally:
- The temperature of the return water of the district heating network
- Outdoor air, and in this case the heat energy of the gas is wasted.

*Fuel flexibililty:* The content and the composition of the ash can be very different for coal and biomass/wastes. It is a wish of many plant owners to be able to use various types of fuels. But thermal reactors have restrictions on the type of fuel to be used. These restrictions typically relate to:
- Particle size
- Heating value of fuel
- Type and amount of inorganic components.
-

*Heating value of fuel:* The heating value of the fuel is strongly affected by the water content of the fuel, thus a specific thermal reactor seldom can use both dry and wet fuel.

*Gas cooler* is typically used to reduce the temperature of the gas. A gas cooler can be a dry gas cooler when cooling the gas to a temperature above the water dew point, or the gas cooler can be a wet gas cooler, when the gas is cooled to a temperature below the dew point of water present in the gas. Examples of gas coolers applicable in connection with the present invention are: Shell and tube coolers, radiation coolers, evaporative coolers, quench, scrubbers.

According to certain aspects of the invention, the hot gas produced in the thermal reactor is cooled in one or several gas coolers. When the gas contain water vapours and have a water dew point above the exit temperature of the gas cooler, then evaporative energy of the water vapours will heat up the gas cooler. This heat can be transferred to e.g. district heating water. In such cases the gas cooler will produce a condensate that needs to be disposed.

Impurities such as particles, salts, etc. in the condensate from a gas from a thermal production unit fired with solid fuel will normally need to be removed before disposal into the environment.

There are special material requirements to gas coolers with condensation. Glasfiber, plastics, glass, high grade steels, cheramics are typical suitable materials.

*Gas cleaning:* Due to environmental concern impurities of the gas may or should be removed. Common cleaning technologies are:
- Cyclones
- Bag house filter
- Electrostatic filter
- Scrubber
-

Especially bag filters and electrostatic filters are very effective towards particulate filtration, whereas cyclones and scrubbers typically are less effective, but also normally cheaper.

*Scrubbers:* It is well known, that hot gases can be cooled from high temperatures (100°C - 1000°C) to below 100°C by injection of water into the gas. Such systems are normally called scrubbers.

It is also well known that the injected water will collect (absorb) some of the pollutants, e.g. acids, particulates etc., from the hot gas.
Some scrubbers are designed to have a high efficiency regarding removal of contaminants.

It is well known that the cleaner the scrubber water is, the more efficient is the scrubber as scrubber water with a high load of contaminants can pollute the gas with contaminants from the scrubber water. There are basically two possibilities of getting clean water for the scrubber:
- Use fresh clean water
- Reuse scrubber water that is cleaned before reuse.

The scrubber water circulating is normally not filtered or cleaned in any way. In some cases the scrubber water can be neutralised e.g. with NaOH or lime. Normally, only the excess water, the produced condensate, is cleaned before it is disposed.

When scrubber water is not regularly cleaned, the particle and salt content may become rather high, and the scrubber water may cause re-entrainment of contaminants into the gas.

*Energy recovery of scrubber water:* It is well known to recover energy of the circulating scrubber water i.e. to pre heat district heating water. When scrubber water is loaded with particles the scrubber - district heating heat exchanger may have a short lifetime as coarse particles erode the heat exchanger.

*Quench:* In some cases a quench is prior to the main scrubber. Such a quench can be installed in order to protect the following scrubber from too high temperatures. The water from the quench is typically lead to the main scrubber and mixed with the water herein.

*Treatment of excess scrubber water:* The flow of excess water is a much smaller than the flow of the circulating scrubber water. Excess water (condensate) is normally cleaned before disposal. There are several methods known clean the excess scrubber water, including:
- Gravity sedimentation operations
- Filters

*Separation technologies for high flow of water:* From other industries other water separation technologies are used. Such technologies can be:
- Cheramic membrane filters
- Hydrocyclones

*Ceramic membrane filters:* In a ceramic membrane filter a high flow of water with contaminants is flowing through the membrane. A small fraction of water is diffusing through the membrane and thus leaves the filter cleaned. The particulates and other impurities leave the filter with the main water flow. Such "filter principle" is not used in condensing scrubbers, as particles and other impurities are not separated from the system.

*Hydro cyclones:* Hydro cyclones can be used to make a low stream (about 5-20%) of particle loaded water fraction and a high stream (80-95%) of cleaner water fraction. Hydro cyclones are not used in condensing scrubbers as the water fractions with the high particle load needs further filtration, and therefore are the hydrocylone not cost efficient.

*Emissions:* Energy plants using solid fuels meet certain emission regulations, which are constantly being tightened. Typically particle emission, CO, NOx is regulated but also SO2, Chlorine, Dioxine, Heavy metals, furans can be regulated. There are different standards of measure emissions. In some particle emission standards salts are measured as particle emission. i.e. Danish standard MEL-02.

*Air moisturisers:* Air moisturisers can be used in connection with condensing scrubbers. Air moisturisers result in several advantages including higher energy out-put in condensing unit and better combustion/gasification properties in the thermal reactor:
- Better producer gas (H2 content)
- Slagging
- Agglomeration
- NOx

### DESCRIPTION OF THE INVENTION AND PREFERRED EMBODIMENTS THEREOF

The present invention provides inter alia an improved method and an improved system or installation for thermal conversion of solid fuels into energy, hereof at least part of the energy as hot water.

In a first aspect the present invention relates to a thermal plant comprising the features of claim 1.

The present invention is usefull inter alia in relation to an air moisturizing system of a thermal plant according to the invention , the moisturising system being adapted to produce a first and a second stream of moisturised air, wherein the first stream of moisturised air has a higher absolute water content, measured in kg H2O per m3 dry air, than the water content of the second stream of moisturised air.

Please note, that in the present context the term air is preferably used in the sense of atmospheric air and in general an oxygen containing gas, and even a gas consisting mainly of oxygen such 99.9 %.

The invention may in some aspect and preferred embodiments make use of number of device and some of such device and their use is further disclosed in the following. Further embodiments and aspects are presented in the claims as well.

### Hydro cyclone

In accordance with the present invention one or several hydro cyclones may be placed upstream to the heat exchanger which cools the condensate from the quench and/or the gas scrubber. Hereby the lifetime of the heat exchanger will be extended considerably and the cleaning efficiency of the scrubber will be increased.

The collected particles may be lead to the ash and or to the fuel and/or to somewhere else, e.g. a disposal site.

### The double air moisturisers

In accordance with the invention a double air moisturisers may be used, preferably in a configuration where:
- a main air moisturiser may be used for the main air flow and
- a booster air moisturiser may used for a minor airflow.

When primary air for the solid fuel conversion is used as gasification agent a high load of water vapours is a great advantage in order to prevent slagging and in order to enhance H2 production in the gasifier.

### Membrane filters

In accordance with the invention a high flow membrane filter may be used to clean the excess condensate produced in the system before it is being disposed into the environment. The particles may preferably be circulated to the ash and/or the fuel and/or disposed other places.

### Quench, condensing gas cooler and air moisturiser

In accordance with the present invention a Quench with a dirty water outlet, a condensing gas cooler with a clean warm water outlet and an air moisturiser may advantageously be used.

The quench may collect the most particles, salts and acids. The quench water may be disposed of the scrubber system to the fuel/ash/other place.
The warm water of the condensing gas cooler may be cooled in a heat exchanger which produces heat that can be utilised. The gas will be cooled by cold water from an air moisturiser.

The present invention may provide clean water for the gas cooler and air moisturiser and a clean cold gas of the gas cooler.

### The air moisturizing system combined with a gasifier

In accordance with the invention an air moisturizing system may be connected to a gasification system. In this way the produced gas will be cooled and thus have an increased heating value pr. volume. This may result in a high power output of a power machine. A further advantage with such system may be that moisturised air is well suited for gasification process as steam-carbon reactions produce hydrogen.

A further advantage of such system may be that the overall system efficiency can be improved as more heat may be produced in connection with the condensing gas cooler, as the gasification air is moisturised.

### Cheap, simple and compact

As indicated above, various aspects of the present invention may offer a number of advantages compared to state-of-the-art combustion technologies. It could therefore be expected that various aspects of the invention will be expensive and complicated. However, the simplicity and the compactness of the system may be seen as a main advantage of the invention.

### Pressure of system

Typically, the pressure in various components of the invention may preferably be atmospheric pressure, although various aspects of the invention may be designed for both pressures being above and/or below atmospheric pressure.

### Materials

Typically, various components of the invention such as the thermal reactor may be built of high-temperature materials such as bricks and insulation blocs inside, preferably comprising a steel vessel with insulation on its outside.
Other parts of the components of the invention such as the water treatment part and the gas coolers may be built of plastics, glasfiber, glass, stainless steel.
In the following the present invention and particular preferred embodiment thereof will be further disclosed in connection with the accompanying drawings in which:
Fig. 1 shows a schematically an embodiment of a system for cleaning of and heat recovery from hot gas.
Fig. 2 shows a similar embodiment to the one shown in Fig. 1 but where the gas cooler has been replaced with a particle separator such as a scrubber.
Fig. 3a shows a more detailed overview over the embodiment of an air moisturiser means.
Fig. 3b shows an embodiment wherein two moisturiser units are serial connected to each other.
Fig. 3c shows a further embodiment wherein two moisturiser units are parallel connected to each other having a common or separate air or oxygen inlets.
Fig. 4 shows inter alia an embodiment of a preferable particle separator in more details.
Fig. 5 shows a schematically overview over one of the preferred embodiments where a thermal gasifier is used as a thermal reactor.
Fig.6 shows a full schematic overview over an embodiment of the invention where the invented system for cleaning and heat recovery is used.
Fig. 7 shows schematically a preferred embodiment of a plant according to the present invention.
Figure 8 shows a preferred embodiment according to the present invention, including a venturi scrubber.
Figure 9 shows a preferred embodiment according to the present invention in which solid fuel is converted into energy.
Figure 10 together with tables I and II shows energy balances and gas compositions for embodiments of plants according to the present invention.

### DETAILED DESCRIPTION OF PREFERRED EMBODIMENTS

In the figures, various elements are depicted by use of dotted lines. The use of such dotted lines to indicate that the element in question is optionally or it position is optionally.

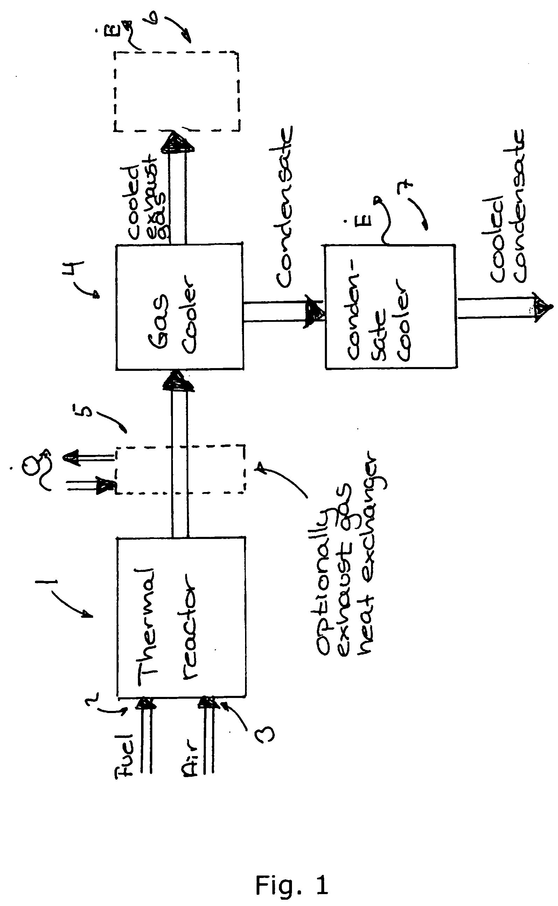

Fig. 1 shows schematically an embodiment of a system for cleaning of and heat recovery from hot gas. This embodiment comprises a thermal reactor (1) wherein fuel is burned or gasified. The thermal reactor (1) has one fuel inlet (2) connected to a fuel feeder (not shown) and one or a plurality of air inlets (3) feeding air or pure oxygen into the thermal reactor (1). If needed, the air or oxygen could be moisturised by the air passing through an air moisturiser connected before the air inlets (3) of the thermal reactor (1). The exhaust gas from the thermal reactor (1) is led through a channel from the thermal reactor (1) to a gas cooler (4). An exhaust gas heat exchanger unit (5) could be, as an option, connected to the channel between the outlet of the thermal reactor and the inlet of the gas cooler (4). The gas cooler (4) receives hot exhaust gas and delivers cooled exhaust gas to an optional heat extracting means (6), typically being a heat exchanger and condensate to a condensate cooler unit (7) which is adapted to extract energy. The cooled condensate delivered from the condensate cooler (7) may either be fed to a sewer or be re-used in the process.

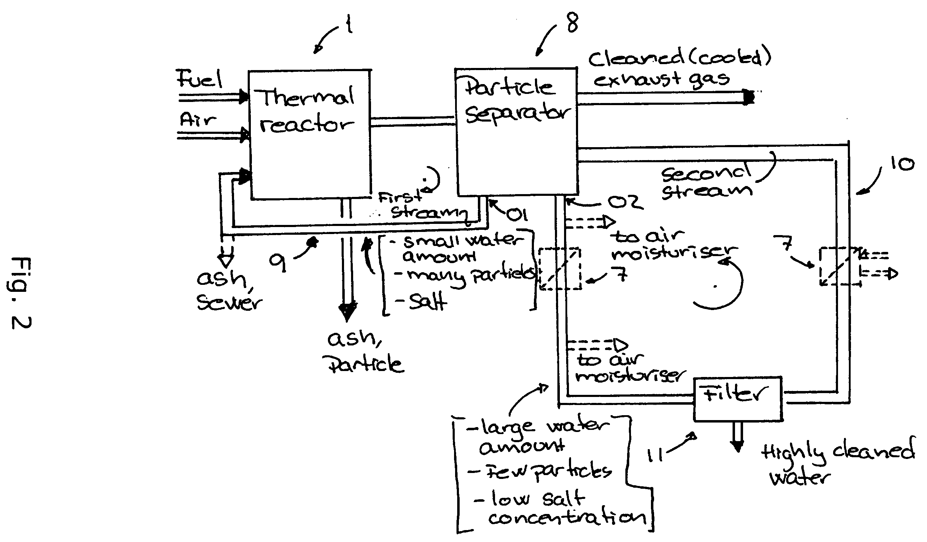

Fig. 2 shows a similar embodiment to the one shown in Fig. 1 but where the gas cooler (4) of fig. 1 has been replaced with - or is constituted by - a particle separator (8) such as scrubbers and/or hydro cyclones. Hot exhaust gas from the thermal reactor (1) is delivered to the inlet of the particle separator (8). The particle separator (8) has at least two outlets (01, 02) for respectively a first stream (9) and a second stream (10) of water with particles as will be disclosed further below. As indicated, the system according to fig. 2 comprises hydro cyclone and/or as scrubbers and no flue gas leaves the hydro cyclone and/or scrubbers.

One outlet (01) is used for the first stream (9) to feed a small amount of water with a high content of particles and salt back to the thermal reactor (1). This first stream can be fed either directly to the thermal reactor (1) or via one or a plurality of air moisturiser(s) (not shown in fig. 2). This first stream (9) could also, if needed, be fed directly to a sewer. The second stream (10) has a relatively larger water volume and contains relatively fewer particles and has a relatively lower salt concentration compared to the first stream (9). A filtering (11) is connected to the second stream (10) as shown in fig. 2 and has two outlets, one that could be used, if needed, to tap highly cleaned water out of the system and one that distributes the rest of the second stream (10) to the particle separator (8). A variety of optional elements may advantageously be applied to the second stream (10) such as outlets to air moisturisers and/or heat exchangers. The second stream (10) will be cooled while passing through various elements to a phase and temperature suitable for the particle separator (8). In fig. 2, the condensate coolers are indicated by dotted lines and numeral 7. It is indicated that a condensate cooler (7) may be left out or arranged upstream or downstream of the filter (11).

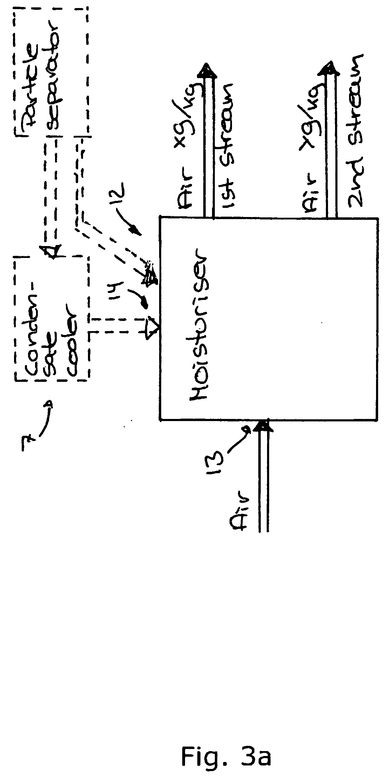

Fig. 3a shows a more detailed overview over the embodiment of an air moisturiser (12) producing a 1st and a 2nd stream of moisturised air. The air moisturiser (12) has a plurality of inlets and outlets where at least one is an air inlet (13) and one is an inlet delivering water (14) from either, depending on the configuration, a gas cooler means or a particle separator's first or second stream (9, 10). Depending on the configuration of the preferred embodiment, the water may pass through a condensate cooler (7) before entering the air moisturiser to recover energy of the condensate and to obtain the right (in the sense of desired) phase and temperature. The condensate cooler (7) may be left out as indicated by the dotted line showing a connection from the particle separator to the moisturiser (12).

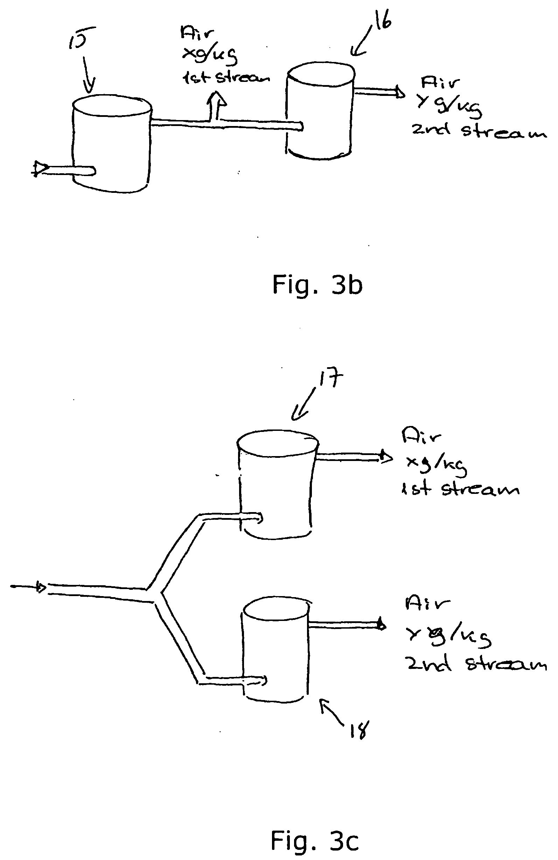

Fig. 3b shows an embodiment wherein two moisturiser (12) are serially connected to each other. Air or pure oxygen is delivered to the first moisturiser (15) wherein the delivered air or oxygen is moisturised using water or steam. Moisturised air or oxygen is transferred from the first moisturiser means (15) into a channel from which moisturised air or oxygen is extracted from to be delivered as the 1st stream of moisturised air connected to a thermal reactor (1). The remaining air or oxygen is delivered to a second moisturiser (16) in which air or oxygen is further moisturised using water or steam. An outlet from the second moisturiser (16) delivers a 2nd stream of moisturised air or oxygen to to an inlet of the thermal reactor (1).

Fig. 3c shows a further embodiment wherein two moisturiser means (12) are parallelly connected to each other having a common air or oxygen intake point. Each moisturiser (17, 18) is moisturizing air using water or steam and delivers moisturised air or oxygen to separate air streams (1st and 2nd stream of moisturised air) fed to the inlets on the thermal reactor (1).

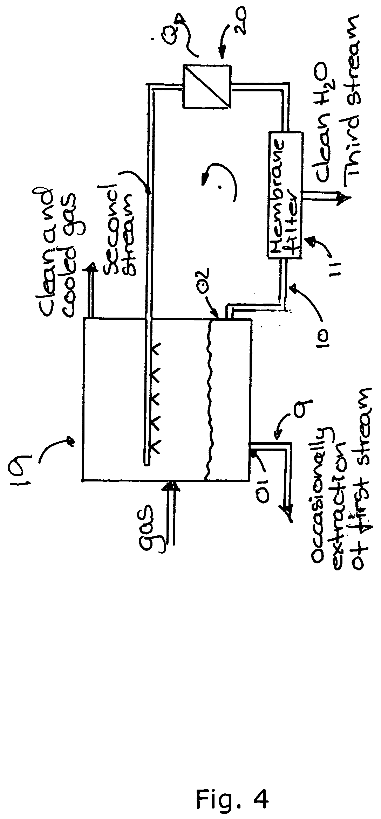

Fig. 4 shows a preferred embodiment of a particle separator (8) in more details. Here the particle separator is a part of a scrubber (19) spraying the exhaust gas with clean re-used scrubber water. The spraying could be done at one stage or at a plurality of stages depending on the configuration. From the scrubber (19) cleaned and cooled gas is delivered but also water will be delivered using, in this configuration, two different outlets (O1, O2). Outlet (O2) is supplying used and unclean water into the second stream (10). The particle separation is established by arranging the outlet (O2) above the bottom of the scrubber (19) below the water surface in the scrubber (19) and by arranging the outlet (O1) at the bottom of the scrubber (19). The separation is due to a sedimentation of the particles in the water present in the scrubber (19) resulting in that the concentration of particles in the water increases towards the bottom of the scrubber (19). Accordingly, the particle separator comprises the outlets (O1, O2) arranged at two different levels relatively to the water surface in the scrubber (19). Here the water will pass through a filtering system (11) such as a membrane filter that could, if needed, deliver very clean water into a third stream of water. Clean filtered water will continue from the filtering means towards, in this embodiment, a heat exchanger (20) that cools the water and delivers energy before the water is re-used in the scrubber (19). Some water could occasionally be extracted into the first stream (9). It is noted that the filter (11) may left out (similarly for e.g. fig. 2).

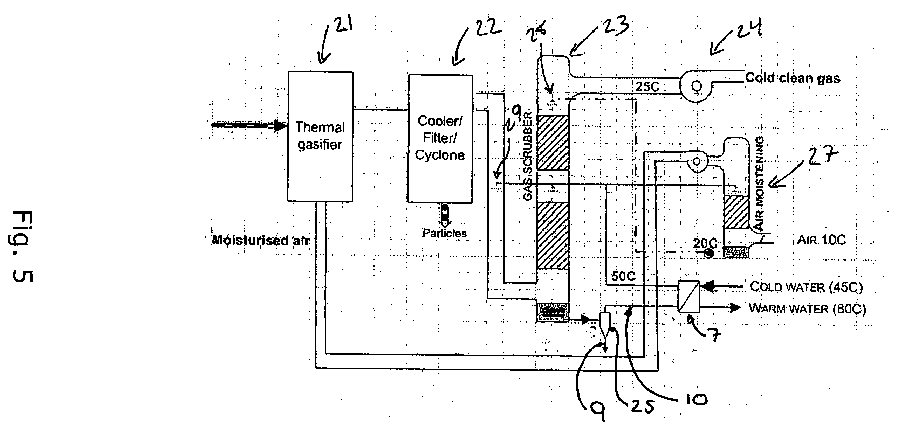

Fig. 5 shows schematically an overview over one of the preferred embodiments of the invention in which a thermal gasifier (21) is used as a thermal reactor (1). The exhaust gas from the thermal gasifier (21) is fed to unit (22) being a cooler and/or filter and/or cyclone where the exhaust gas is cooled and some of the particles are separated out. The unit (22) is downstream connected with a particle separator such as a gas scrubber (23). In the gas scrubber (23), the gas may be cooled and cleaned in one or in a plurality of stages using water, hence leading to cold clean gas leaving the system at position (24) in fig. 5. The water used to cool and clean the gas is collected at the bottom of the scrubber (23) from where it is delivered to a unit (25), preferably in the form of a cyclone, to be separated into a first and second stream ? (9, 10) of water in the same way as previously described. Accordingly, the particle separator in the embodiment of fig. 5 is the cyclone (25). A condensate cooler (7) is arranged in the second stream of water.

The water of the second stream (10) will, after being cleaned in the unit 25 and cooled, be used in the scrubber (23). The water of the second stream could optionally also be used to pre-cool the gas before the gas enters the scrubber for example by using a quench (29). The water of the second stream (26) could optionally also be used in an air moisturiser (27) that could be connected to the thermal gasifier (21). The water collected at the bottom of the air moisturiser (27) could optionally be used at a second injection point (28) in the scrubber (23). All temperatures stated in the schematically flow scheme of fig. 5 are typically temperatures in such a system but are not intended as limiting the scope of the patent since other temperatures could be used depending on the system.

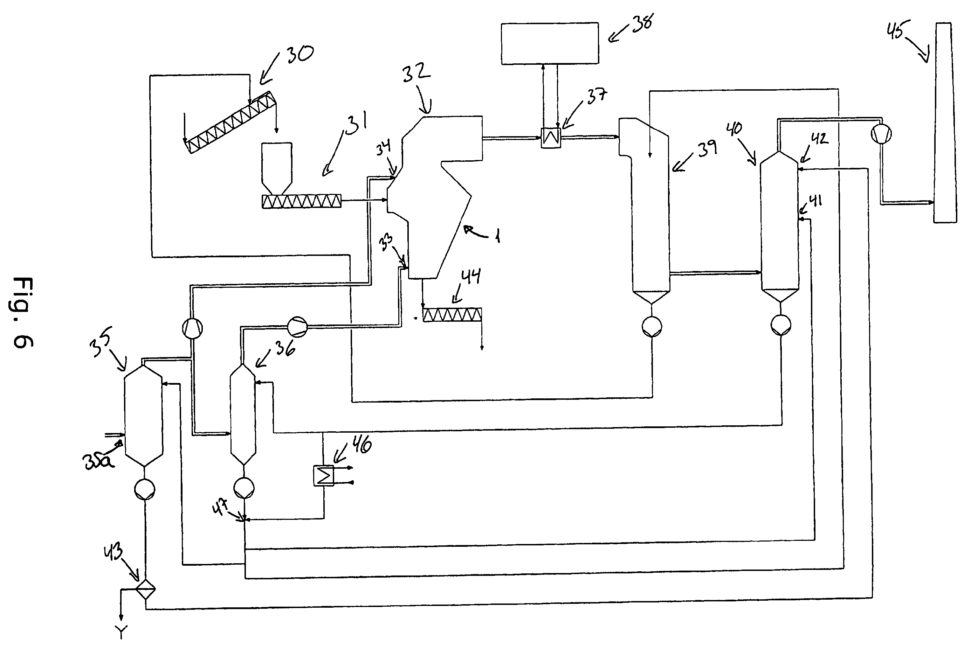

Fig.6 shows a full schematic overview over a preferred embodiment of the invention where the invented system for cleaning and heat recovery is used. In this embodiment a feed system comprising a fuel storage (30) and a fuel feeder (31) is feeding fuel to a thermal reactor (1) comprising a furnace (32). To the furnace (32) are two inlets connected feeding moisturised air or oxygen to the furnace (32). The moisturised air is distributed both at the bottom (33) of the furnace and above the point of fuel feeding (34). At the bottom of the furnace is an outlet (44) for taking out ash into for example a forest, fields or to deposits. The moisturised air or oxygen comes from a moisturizing system comprising two air moisturisers (35, 36), working using the same principles as a scrubber. These two air moisturisers (35, 36) are serially connected. Here the main moisturiser (35) distributes moisturised air both to the air inlet (34) above the feeding inlet at the furnace (32) and to an air moisturizing booster (36) which further moisturises the air before being injected at a position in the bottom (33) of the furnace (32).

Thus, the temperature of the fuel in the thermal reactor is reduced and hereby production of slagging and NOx is reduced and the temperature of the gas combustion is reduced hereby thermal NOx formation is reduced. Air or oxygen is fed into the main moisturiser (35) at position (35a).

Hot exhaust gas created in the furnace (32) will go through a heat exchanger (37) that is connected to an energy extraction device (38) which could produce both or either of electric energy and energy for district heating. The hot gas will then continue into the scrubber system where it first enters the quench (39) where water from the air moisturiser booster (36) is used to cool down the exhaust gas before entering the scrubber (40). The remaining part of the scrubber water will be collected together with particles and salts at the bottom of the quench (39). These particles will be sent back to the fuel storage (30) to be feed back into the thermal reactor and leave the thermal reactor as bottom ash.

The cooled and cleaner exhaust gas will then continue into the scrubber (40) where water will added to the gas at two different positions thus cooling the gas. At the first position (41) it is with water from the air moisturiser booster (36) and condensate from from the condensate cooler (46) and at the second position (42) it is with colder water from the main air moisturiser (35). The clean and cooled gas will then be fed to a chimney (45).

As described above, the exit of the quench (39) is a dirty small stream (frist stream of water) and the exit of the scrubber (40) is a cleaner and larger stream (second stream of water).

The second stream of water from the scrubber (40) is split into a smaller stream going to the booster moisturised (36) and a larger stream going into the heat exchanger (46) for extracting energy which can be used for district heater. Water exiting the booster mousturiser 36) is mixed with water from the heat exchanger 46 in point (47). This stream is downstream divided into a stream going to the main air moisturiser from after which it is filtered in (43) and fed back to the scrubber (40) at position 42, and two streams: one feeding water into the quench (39) and one feeding water into the scrubber (40) at position (41).

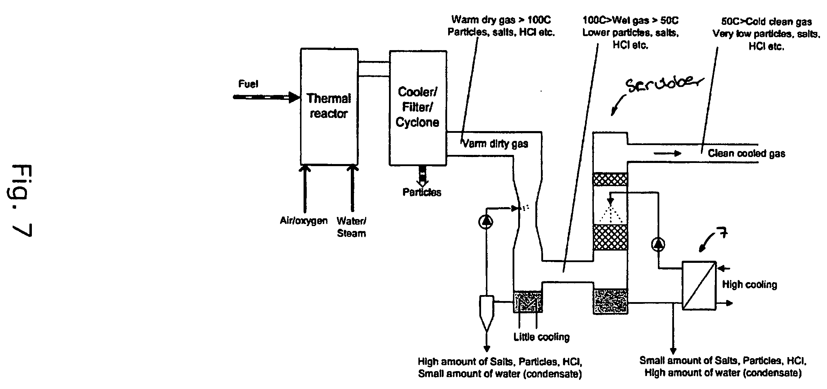

In fig. 7, the particle separation is performed by the quench with hydro cyclone and the scrubber in combination. The hydrocyclone delivers the first stream of water (indicated by "High amounts of salts... Small amount of water .." in fig. 7). The second stream of water is extracted upstream of the condensate cooler (7) (indicated by "Small amounts of Salts... High amounts of water" in fig. 7)

Figure 7 shows schematically a thermal reactor that is supplied with fuel, air or oxygen and/or water and/or steam. The hot gases are transported in a channel to the scrubber. One or several components may advantageously be arranged between the thermal reactor and the scrubber, e.g. heat exchangers, filters, cyclones, inlet for moisturising agent, such as water, water collecting device etc. One or several agents, such as lime, activated carbon etc., may advantageously be added to the dry gas before the scrubber. In connection with the embodiment shown in fig. 7 and the invention in general, the following measures may advantageously be invoked:
- The scrubber is preferably oriented vertically, but may also be horizontal or with oblique orientation.
- One or several agents, such as NaOH, lime, activated carbon etc. may advantageously be added to the scrubber water.
- One or more hydrocyclones or centrifuges, in which the scrubber water is separated into two streams, may be included to provide: A dirty stream, containing most particles, and a clean stream.
- The clean stream is led to a heat exchanger, in which the scrubber water is cooled.
- The cooled and cleaned scrubber water is used in the scrubber to clean and cool the gas.
- Excess water can be removed in a droplet separator before the gas is led to the atmosphere or used in a process.

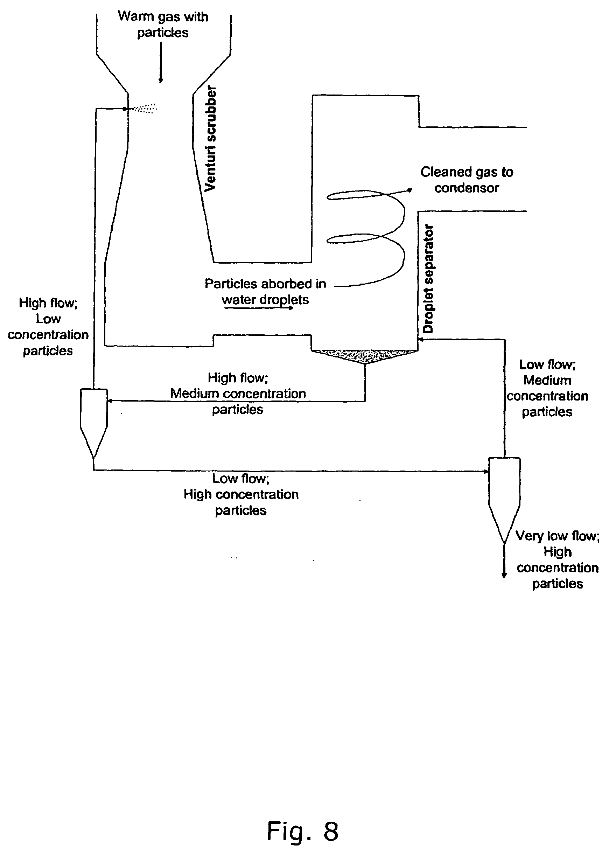

Figure 8 shows a preferred embodiment according to the present invention including a venture scrubber.

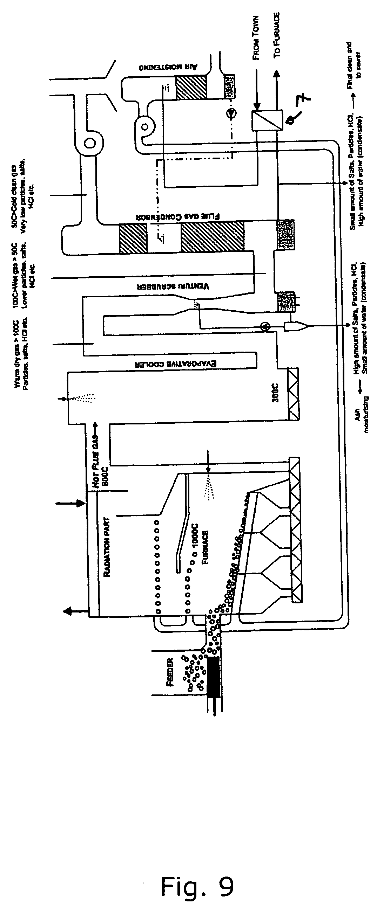

Figure 9 shows a preferred embodiment according to the present invention in which solid fuel is converted into energy in a clean and efficient system. A condensate cooler is indicated by numeral (7). The system comprising inter alia a feeder and thermal reactor, which components have been disclosed in further details herein and some, further, disclosures to some of the components that may be applicable to this and other aspects and embodiment of the present invention are presented below:

### Feeder and Thermal reactor

In the bottom part, the solid fuel is converted into a burnable gas and fine ash. The solid conversion is an updraft gasification process: In the top layer, the fuel is dried and devolatized (pyrolysis). In the lower part, moisturised air from the booster air moisturiser is reacting with the carbon in a gasification process. By having a high moist content in the air the tendency of slagging is reduced and hereby the thermal reactor may use various types of fuel, including low cost ash rich fuels.

Gas from gasification zone is combusted in the top section. The gas combustion (flow, temperatures, emissions etc) is very stable. This is due to the operating concept of the oven.

The design is based on fuel with a low heating value resulting in an adiabatic temperature of 1000-1150°C, with an oxygen content in the flue gas of 4-7% (dry basis).

When the heating value increases, condensate preferably from a low temperature cooler, may be added to the fuel.

### High temperature cooling

A high temperature cooler, when present, may cool to 200°C-600°C, preferably 300°C -400°C. Thereby the cooler may become very compact and low temperature corrosion may be avoided. Due to the water addition to the fuel the steam content of the gas is high and therefore the gas has good radiation properties, which contribute to a compact design.

### Use of heat from a high temperature cooler

A high temperature cooler can produce hot water, steam or thermal oil. Several products may possible be produced by the high temperature cooler including:
- Power by using an ORC (Organic rankine cycle) system which could be driven by thermal oil or hot water, by using a steam turbine or steam engine, stirling engines or other
- Cooling by using absorption chillers
- Clean water by de-salting water
- Steam for industrial or heating purposes

### Quench

In a quench the gas is cooled by water injection preferably to below 100°C and particles, salts, acids etc. is collected in the bottom. The amount of water to the quench is regulated by the temperature of the furnace as the water from the bottom of the quench is used to regulate the temperature of the furnace.

As particles and salts of the quench and the rest of the scrubber system are collected here and send to the fuel, then there is no particle outlet of the scrubber system. All particles leave the system as bottom ash from the thermal reactor.

### Two stage flue gas scrubber

Preferably a system may comprise two packed bed scrubbers enclosed in a single vessel, where the flue gas is preliminary dehumidified and cooled in the lower section and finally further dehumidified and cooled in the upper section.

### High Temperature Flue Gas cooling

A nominal flue gas flow is slightly above 1 kg/s (dry gas flow rate) at 78°C fully saturated. The flue gas may be treated with counter flow cooler water entering at 50°C in the packed bed having a diameter of 1200 mm and a height of 1400 mm and the water is distributed from a grid of nozzles located above the packing. The packing used is 25 mm propylene PALL RINGS (HOSTALEN PPH material).

The cool water may be obtained from a air moisturiser booster and the water exit of a Low Temperature Flue Gas Scrubber located at the top of the assembly. The hot water discharge is transferred to an air moisturiser booster.

A High Temperature Flue Gas scrubber is anticipated to operate essentially linearly for capacities down to about 10% nominal capacity and the gas side pressure drop closely approximate a square root law.

### Low Temperature Flue Gas cooling

The preliminary cooled flue gas is further cooled and dehumidified in counter flow with water supplied from the Main Air Moisturiser discharge in a packed bed having a diameter of 1200 mm and a height of 1200 mm. The water is distributed from a grid of 26 nozzles located above the packing. The packing used is 25 mm propylene PALL RINGS (HOSTALEN PPH material). To limit entrained water mist a droplet separator (200 mm demister pad) is placed above the water distributor.

The Low Temperature Flue Gas scrubber is anticipated to operate essentially linearly for capacities down to about 10% nominal capacity and the air side pressure drop closely approximate a square root law.

*Air moisturisers* In order to provide the primary air with a high load of water vapors to the thermal reactor a double air moisturiser system is utilised.

### Main Air Moisturiser

The nominal total air requirement is 1 kg/s (dry air flow rate) at 20°C. The air is treated with counter flow water entering at 50°C in packed bed having a diameter of 1200 mm and a height of 1800 mm and the water is distributed from a grid of 21 nozzles located above the packing. The packing used is 16 mm propylene PALL RINGS (HOSTALEN PPH material). To limit entrained water mist a droplet separator (100 mm demister pad) is placed above the water distributor.

The hot water is obtained from the flue gas scrubber and the cool water discharge is transferred for final flue gas cooling in that scrubber with a part discharged to the drain.

The main air moisturiser is anticipated to operate essentially linearly for capacities down to about 10% nominal capacity and the air side pressure drop closely approximate a square root law.

### Air Moisturiser Booster

About 20% of the moisturised air from the main scrubber is further moisturised in the booster scrubber for use as primary combustion air - or gasification agent - while the remaining air is used as secondary air in the furnace for burning the combustible gases from the integrated updraft gasifier. The air is treated with counter flow water entering at 67°C in packed bed having a diameter of 600 mm and a height of 1800 mm and the water is distributed from a grid of 9 nozzles located above the packing. The packing used is 16 mm propylene PALL RINGS (HOSTALEN PPH material). To limit entrained water mist a droplet separator (100 mm demister pad) is placed above the water distributor.

The hot water is obtained from the high temperature part of the flue gas scrubber and the cool water discharge at 50°C is transferred for initial (high temperature) flue gas cooling in that scrubber and also in the main moisturiser.

The booster air moisturiser is anticipated to operate essentially linearly for capacities down to about 10% nominal capacity and the air side pressure drop closely approximate a square root law.

### Water system

As described above, the water system for the moisturizing scrubbers is closely coupled to the flue gas cooling and dehumidification system.
▪ The (25°C) cool exit water from the main air moisturiser is used partly for the final cooling of the flue gas and partly discharged to the drain as excess condensate.
▪ The (50°C) cool exit water from the booster air moisturiser is used partly for the initial cooling of the flue gas and partly for the water supply to the main air moisturiser.

Therefore, both moisturisers are equipped with pumps (nominal 5,5 m³/h for the main scrubber pump and 3,3 m³/h for the booster scrubber pump).

### Cleaning of produced condensate and removal of particles

Due to the effective cooling of the flue gas the system produce a condensate that shall be disposed. The condensate that circulates between the flue gas scrubber and the air moisturisers is relatively clean, due to the pre-cleaning in the quench, but not necessarily being clean enough to be disposed. A membrane filter is placed on the scrubber water circuit in which about 5-15% of the water is cleaned over the filter and disposed, while the rest of the water and the particles is circulated to flue gas scrubber, thereafter to the air moisturiser, thereafter to the quench and thereafter to the fuel and hereby are the particles removed from the system.

A number of measures may in accordance with the present invention be included in various aspect and embodiments of the invention. Many of these are disclosed above and some are presented in the listing below:
- A chemical agent may be added to the scrubber water to increase the efficiency of the hydrocyclone.
- A chemical agent may be added to the scrubber water to increase the efficiency of removal of contaminants of the gas.
- Energy from the heat exchanger may advantageously be used for district heating.
- The process is preferably operated so that the temperature of the gas before the scrubber is preferably more that 200°C.
- At least one hydro cyclone and/or one or more centrifuges may preferably be arranged upstream the heat exchanger.
- A preferred embodiment of a system for cooling and cleaning gases, may advantageously comprise
   - a thermal reactor which converts solid fuel into a hot gas
   - an inlet duct for the gas to at least one scrubber
   - at least one pump to circulate the scrubber water
   - at least one hydro cyclone and/or a centrifuge
   - at least one heat exchanger that cools the scrubber water.

Such a system may preferably comprise means
- for controlling the pH level of the scrubber water
- for adding a chemical agent to the scrubber water so the particles will agglomerate
and/or
- for adding a chemical agent to the gas to remove contaminants of the gas.

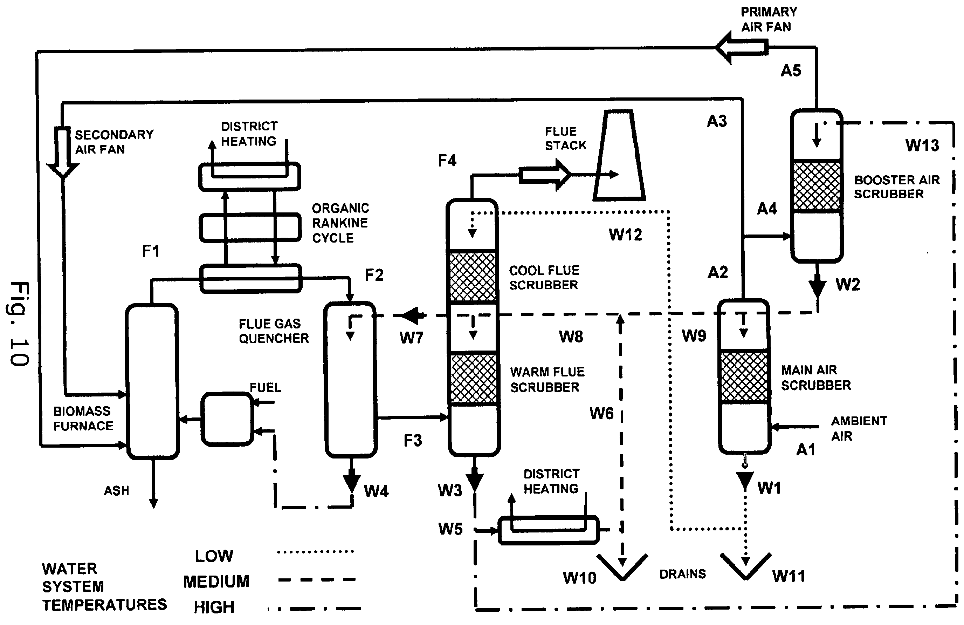

Finally, figure 10 together with the below tables I and II shows energy balances and gas compositions for preferred embodiments of a plant according to the present invention. Gas compositions pertaining to fuel moistures other than shown in table I and II may be estimated by interpolation/exterpolation. It is noted that figure 10 correspond to the embodiment shown in fig. 6. Reference signs used in figure 10 refers to tables I and II.

**TABLE I**

| | | **Fuel Moisture** | | | | | | | | | | | |
|---|---|---|---|---|---|---|---|---|---|---|---|---|---|
| | | **53%** | | **50%** | | **40%** | | **30%** | | **20%** | | **10%** | |
| **WATER SYSTEM** | | ('C) | (kg/s) | ('C) | (kg/s) | ('C) | (kg/s) | ('C) | (kg/s) | ('C) | (kg/s) | ('C) | (kg/s) |
| | **Flue Gas Quencher** | | | | | | | | | | | | |
| W7 | INLET | 49,0 | 0,2417 | 49,0 | 0,2488 | 49,0 | 0,2660 | 49,0 | 0,2765 | 49,0 | 0,2829 | 49,0 | 0,2869 |
| W4 | EXIT | 79,8 | 0,0000 | 79,3 | 0,0068 | 78,2 | 0,0233 | 77,3 | 0,0330 | 76,5 | 0,0388 | 75,9 | 0,0421 |
| | **Warm Flue Scrubber** | | | | | | | | | | | | |
| W8 | INLET | 49,0 | 8,0766 | 49,0 | 7,9722 | 49,0 | 7,6807 | 49,0 | 7,4552 | 49,0 | 7,2751 | 49,0 | 7,1283 |
| NN | FROM ABOVE | 49,0 | 1,4594 | 49,0 | 1,5029 | 49,0 | 1,6216 | 49,0 | 1,7098 | 49,0 | 1,7777 | 49,0 | 1,8312 |
| W7 | TO QUENCHER | 49,0 | 0,2417 | 49,0 | 0,2488 | 49,0 | 0,2660 | 49,0 | 0,2765 | 49,0 | 0,2829 | 49,0 | 0,2869 |
| W3 | 3 EXIT | 76,8 | 9, 7427 | 76,3 | 9,6642 | 75,2 | 9,4457 | 74,3 | 9,2760 | 73,5 | 9,1403 | 72,9 | 9,0291 |
| | **Cool Flue Scrubber** | | | | | | | | | | | | |
| W12 | 2 INLET | 23,0 | 1,4022 | 23,0 | 1,4440 | 23,0 | 1,5582 | 23,0 | 1,6429 | 23,0 | 1,7082 | 23,0 | 1,7596 |
| NN | TO BELOW | 49,0 | 1,4594 | 49,0 | 1,5029 | 49,0 | 1,6216 | 49,0 | 1,7098 | 49,0 | 1, 7777 | 49,0 | 1,8312 |
| | **Warm Air Scrubber** | | | | | | | | | | | | |
| W13 | INLET | 76,8 | 0,6644 | 76,3 | 0,6851 | 75,2 | 0,7463 | 74,3 | 0,7979 | 73,5 | 0,8419 | 72,9 | 0,8800 |
| W2 | EXIT | 49,0 | 0,6368 | 49,0 | 0,6570 | 49,0 | 0, 7170 | 49,0 | 0, 7677 | 49,0 | 0,8110 | 49,0 | 0,8485 |
| | **Cool Air Scrubber** | | | | | | | | | | | | |
| W2 | FROM BOOSTER | 49,0 | 0,6368 | 49,0 | 0,6570 | 49,0 | 0,7170 | 49,0 | 0,7677 | 49,0 | 0,8110 | 49,0 | 0,8485 |
| W9 | FROM MAIN | 49,0 | 1,0016 | 49,0 | 1,0072 | 49,0 | 1,0186 | 49,0 | 1,0229 | 49,0 | 1,0232 | 49,0 | 1,0210 |
| W1 | EXIT | 23,0 | 1,5794 | 23,0 | 1,6043 | 23,0 | 1,6732 | 23,0 | 1,7261 | 23,0 | 1,7681 | 23,0 | 1,8022 |
| | **Misc'I Lines** | | | | | | | | | | | | |
| W5 | TO DISTR. HEAT | 76,8 | 9,0783 | 76,3 | 8,9791 | 75,2 | 8,6993 | 74,3 | 8,4782 | 73,5 | 8,2984 | 72,9 | 8,1491 |
| W6 | TO MAIN | 49,0 | 9,0782 | 49,0 | 8,9794 | 49,0 | 8,6994 | 49,0 | 8,4781 | 49,0 | 8,2983 | 49,0 | 8,1493 |
| W10 | WARM DRAIN | 49,0 | 0,0001 | 49,0 | 0,0000 | 49,0 | 0,0000 | 49,0 | 0,0000 | 49,0 | 0,0000 | 49,0 | 0,0000 |
| W11 | COOL DRAIN | 23,0 | 0,1772 | 23,0 | 0,1603 | 23,0 | 0,1150 | 23,0 | 0,0832 | 23,0 | 0,0599 | 23,0 | 0,0425 |

| **HEAT RECOVERY** | | KJ | | KJ | | KJ | | KJ | | KJ | | KJ | |
|---|---|---|---|---|---|---|---|---|---|---|---|---|---|
| | ORC CYCLE | 1329,8 | | 1330,0 | | 1330,3 | | 1330,5 | | 1330,7 | | 1330,9 | |
| | DISTRICT HEATING | 1054,4 | | 1027,3 | | 952,9 | | 896,2 | | 851,5 | | 815,4 | |
| | FUEL LCV INPUT | 2000,0 | | 2000,0 | | 2000,0 | | 2000,0 | | 2000,0 | | 2000,0 | |
| **EFFICIENCY (%)** | | **119,2** | | **117,9** | | **114,2** | | **111,3** | | **109,1** | | **107,3** | |

**TABLE II**

| GAS SYSTEM when fuel moisture is 50%: | | | | | | | | |
|---|---|---|---|---|---|---|---|---|
| **GAS SYSTEM** | | **('C)** | **(kg/s)** | **H2O vol%** | **O2 vol%** | **N2 vol%** | **CO2 vol%** | **g H2O/kg** |
| **AIR** | A1 | 20,0 | 1,0775 | 0,90 | 20,79 | 78,21 | 0,10 | 5,67 |
| | A2 | 44,0 | 1,1374 | 8,98 | 19,09 | 71,83 | 0,09 | 61,59 |
| | A3 | 44,0 | 0,9100 | 8,98 | 19,09 | 71,83 | 0,09 | 61,59 |
| | A4 | 44,0 | 0,2275 | 8,98 | 19,09 | 71,83 | 0,09 | 61,59 |
| | A5 | 64,0 | 0,2556 | 23,59 | 16,03 | 60,30 | 0,08 | 192,66 |
| **FLUE** | F1 | 1050,0 | 1,4376 | 31,96 | 3,33 | 54,25 | 10,46 | 275,92 |
| | F2 | 400,0 | 1,4376 | 31,96 | 3,33 | 54,25 | 10,46 | 275,92 |
| | F3 | 79,3 | 1,6797 | 45,52 | 2,66 | 43,44 | 8,38 | 490,76 |
| | F4 | 41,3 | 1,1828 | 7,81 | 4,51 | 73,50 | 14,17 | 49,79 |
| | | | | | | | | |

| GAS SYSTEM when fuel moisture is10% | | | | | | | | |
|---|---|---|---|---|---|---|---|---|
| **GAS SYSTEM** | | **('C)** | **(kg/s)** | **H2O vol%** | **O2 vol%** | **N2 vol%** | **CO2 vol%** | **g H2O/kg** |
| **AIR** | A1 | 20,0 | 1,2104 | 0,90 | 20,79 | 78,21 | 0,10 | 5,67 |
| | A2 | 44,0 | 1,2778 | 8,98 | 19,09 | 71,83 | 0,09 | 61,59 |
| | A3 | 44,0 | 1,0222 | 8,98 | 19,09 | 71,83 | 0,09 | 61,59 |
| | A4 | 44,0 | 0,2556 | 8,98 | 19,09 | 71,83 | 0,09 | 61,59 |
| | A5 | 64,0 | 0,2871 | 23,59 | 16,03 | 60,30 | 0,08 | 192,66 |
| **FLUE** | F1 | 1050,0 | 1,5067 | 24,48 | 3,69 | 60,22 | 11,61 | 190,40 |
| | F2 | 400,0 | 1,5067 | 24,48 | 3,69 | 60,22 | 11,61 | 190,40 |
| | F3 | 75,9 | 1,7515 | 39,52 | 2,96 | 48,23 | 9,30 | 383,79 |
| | F4 | 39,8 | 1,3233 | 7,19 | 4,54 | 74,00 | 14,27 | 45,53 |

## Claims

1. A thermal plant comprising
- a thermal reactor (1) in which a chemical process takes place during which process solid fuels being biomass or waste react with oxygen to produce an exhaust gas comprising hot flue gas
- gas coolers (39, 40) cooling the exhaust gas to a temperature below the dew point of the water present in the exhaust gas thereby producing a condensate;
- an exhaust gas heat exchanger (37) arranged upstream of the gas coolers (39, 40) for extracting heat from the exhaust gas
- a condensate cooler (46) cooling condensate to extract energy from condensate
- wherein the thermal plant comprises a particle separation system for separating particles from a stream of particles produced in the thermal reactor, the particle separation system comprises said gas coolers in the form of a quench (39) and a scrubber (40) for producing
- a first stream of water having a first content of particles (9) in the exit water of the quench (39),
- a second stream of water having a second content of particles (10) in the exit water of the scrubber (40),
wherein
- the ratio between the second stream of water and the first stream of water when measured in m3/h is larger than 5,
- the content (kg/m3) of particles in the first stream is larger than the content (kg/m3) of particles in the second stream of water,
and, wherein the plant further comprising
- feeding means provided for feeding at least a fraction of the first stream of water to ash produced in the thermal reactor and/or to a fuel for the thermal reactor.

2. A thermal plant according to claim 1, wherein the stream of particles is a water condensate produced from the exhaust gas from a thermal reactor and wherein the separation system comprising a hydro cyclone.

3. A thermal plant according to claim 1 or 2 further comprising a connection leading at least a fraction of the second stream of water to a moisturising system moisturising air used in the thermal reactor of the thermal plant.

4. A thermal plant according to claim 1, wherein 10 %, such as 30%, preferably 70% or even the entire first stream of water is fed to the fuel.

5. A thermal plant according to claim 1, wherein 10 %, such as 30%, preferably 70% or even the entire first stream of water is fed to the ash.

6. A thermal plant according to any of the preceding claims 1-5, wherein the first stream of water is divided into two streams one being fed to ash and one being fed to fuel.

7. A thermal plant according to any of the claims 1-6, further comprising a recirculation loop for recirculating the second stream of water produced by the particle separation system back to the particle separation system.

8. A thermal plant according to claim 7, wherein the recirculation loop comprising a filter, such as a membrane filter, for filtering out from the second stream of water a third stream of water having a smaller content of particles (kg/m3) than the second stream of water.

9. A thermal plant according to claim 7 or 8 wherein the recirculation loop comprising a heat exchanger for cooling the second stream of water.

10. A thermal plant according to any of the claims 7-9, wherein the recirculation loop comprising a connection for feeding a fraction of the second stream of water to a air moisturizing system for moisturizing air to be used in a thermal reactor.

11. A thermal plant according to claim 10, wherein the connection for feeding a fraction of the second stream of water to an air moisturizing system is arranged downstream of the heat exchanger.

12. A thermal plant according to claim 10, wherein the connection for feeding a fraction of the second stream of water to an air moisturizing system is arranged upstream of the heat exchanger.

## Patentansprüche

1. Wärmeanlage, umfassend
- einen thermischen Reaktor (1), in dem ein chemisches Verfahren abläuft, bei dem feste Brennstoffe in Form von Biomasse oder Abfall mit Sauerstoff unter Bildung eines Abgases reagieren, das heißes Rauchgas umfasst,
- Gaskühler (39, 40), die das Abgas auf eine Temperatur unterhalb des Taupunkts des im Abgas vorhandenen Wassers abkühlen, wodurch ein Kondensat gebildet wird;
- einen Abgas-Wärmetauscher (37), der stromaufwärts von den Gaskühlern (39, 40) angeordnet ist, zum Extrahieren von Wärme aus dem Abgas
- einen Kondensatkühler (46), der das Kondensat zum Extrahieren von Energie aus dem Kondensat kühlt
- wobei die Wärmeanlage ein Partikeltrennsystem zum Trennen von Partikeln aus einem im thermischen Reaktor produzierten Partikelstrom umfasst, wobei das Partikeltrennsystem die Gaskühler in Form eines Quenchkühlers (39) und eines Wäschers (40) umfasst zur Herstellung von
- einem ersten Wasserstrom mit einem ersten Gehalt an Partikeln (9) im Ausgangswasser des Quenchkühlers (39),
- einem zweiten Wasserstrom mit einem zweiten Gehalt an Partikeln (10) im Ausgangswasser des Wäschers (40),
wobei
- das Verhältnis zwischen dem zweiten Wasserstrom und dem ersten Wasserstrom wenn in m3/h gemessen mehr als 5 beträgt,
- der Gehalt (kg/m3) an Partikeln im ersten Wasserstrom größer ist als der Gehalt (kg/m3) an Partikeln im zweiten Wasserstrom,
und wobei die Anlage weiterhin umfasst
- Zuführmittel, die zum Zuführen mindestens einer Fraktion des ersten Wasserstroms zu im thermischen Reaktor erzeugter Asche und/oder zu einem Brennstoff für den thermischen Reaktor bereitgestellt werden.

2. Thermische Anlage nach Anspruch 1, wobei der Partikelstrom ein aus dem Abgas einer thermischen Anlage erzeugtes Wasserkondensat ist und wobei das Trennsystem einen Hydrozyklon umfasst.

3. Thermische Anlage nach Anspruch 1 oder 2, weiterhin umfassend eine Verbindung, die mindestens eine Fraktion des zweiten Wasserstroms zu einem Befeuchtungssystem führt, das die in dem thermischen Reaktor der Wärmeanlage verwendete Luft befeuchtet.

4. Thermische Anlage nach Anspruch 1, wobei 10 %, wie 30 %, vorzugsweise 70 % oder sogar der gesamte erste Wasserstrom dem Brennstoff zugeführt werden.

5. Thermische Anlage nach Anspruch 1, wobei 10 %, wie 30 %, vorzugsweise 70 % oder sogar der gesamte erste Wasserstrom der Asche zugeführt werden.

6. Thermischer Anlage nach einem der vorhergehenden Ansprüche 1-5, wobei der erste Wasserstrom in zwei Ströme geteilt wird, wobei der eine Asche und der zweite Brennstoff zugeführt wird.

7. Thermische Anlage nach einem der Ansprüche 1-6, weiterhin umfassend einen Rückführkreislauf zum Rückführen des zweiten vom Partikeltrennsystem erzeugten Wasserstroms zum Partikeltrennsystem.

8. Thermische Anlage nach Anspruch 7, wobei der Rückführkreislauf ein Filter, wie ein Membranfilter, zum Herausfiltern eines dritten Wasserstroms mit einem geringeren Partikelgehalt (kg/m3) als der zweite Wasserstrom aus dem zweiten Wasserstrom umfasst.

9. Thermischer Anlage nach Anspruch 7 oder 8, wobei der Rückführkreislauf einen Wärmetauscher zum Kühlen des zweiten Wasserstroms umfasst.

10. Thermische Anlage nach einem der Ansprüche 7-9, wobei der Rückführkreislauf eine Verbindung zum Zuführen einer Fraktion des zweiten Wasserstroms zu einem Luftbefeuchtungssystem, das in einem thermischen Reaktor zu verwendende Luft befeuchtet, umfasst.

11. Thermische Anlage nach Anspruch 10, wobei die Verbindung zum Zuführen einer Fraktion des zweiten Wasserstroms zu einem Luftbefeuchtungssystem dem Wärmetauscher stromabwärts geordnet ist.

12. Thermische Anlage nach Anspruch 10, wobei die Verbindung zum Zuführen einer Fraktion des zweiten Wasserstroms zu einem Luftbefeuchtungssystem dem Wärmetauscher stromaufwärts geordnet ist.

## Revendications

1. Centrale thermique comprenant
- un réacteur thermique (1) dans lequel se déroule un processus chimique au cours duquel des combustibles solides qui sont de la biomasse ou des déchets réagissent avec de l'oxygène pour produire un gaz d'échappement comprenant un gaz de combustion chaud ;
- des refroidisseurs de gaz (39, 40) refroidissant le gaz d'échappement à une température inférieure au point de rosée de l'eau présente dans le gaz d'échappement, en produisant ainsi un condensat ;
- un échangeur de chaleur pour gaz d'échappement (37) disposé en amont des refroidisseurs de gaz (39, 40) pour extraire de la chaleur du gaz d'échappement ;
- un refroidisseur de condensat (46) refroidissant le condensat pour extraire de l'énergie du condensat ;
- dans laquelle la centrale thermique comprend un système de séparation de particules pour séparer des particules d'un flux de particules produit dans le réacteur thermique, le système de séparation de particules comprenant lesdits refroidisseurs de gaz sous la forme d'un système de refroidissement rapide (39) et d'un épurateur (40) pour produire
- un premier écoulement d'eau possédant une première teneur en particules (9) dans l'eau sortant du système de refroidissement rapide (39),
- un deuxième écoulement d'eau possédant une deuxième teneur en particules (10) dans l'eau sortant de l'épurateur (40),
dans laquelle
- le rapport entre le deuxième écoulement d'eau et le premier écoulement d'eau, mesurés en m3/h, est supérieur à 5,
- la teneur (kg/m3) en particules du premier écoulement est supérieure à la teneur (kg/m3) en particules du deuxième écoulement d'eau,
et dans laquelle la centrale comprend également
- un moyen d'alimentation permettant de diriger au moins une fraction du premier écoulement d'eau vers des cendres produites dans le réacteur thermique et/ou vers un combustible destiné au réacteur thermique.

2. Centrale thermique selon la revendication 1, dans laquelle le flux de particules est un condensat d'eau provenant du gaz d'échappement d'un réacteur thermique et dans laquelle le système de séparation comprend un hydrocyclone.

3. Centrale thermique selon la revendication 1 ou 2 comprenant en outre un raccord conduisant au moins une fraction du deuxième écoulement d'eau vers un système d'humidification humidifiant l'air utilisé dans le réacteur thermique de la centrale thermique.

4. Centrale thermique selon la revendication 1, dans laquelle 10 %, par exemple 30 %, de préférence 70 % ou même la totalité du premier écoulement d'eau est dirigé vers le combustible.

5. Centrale thermique selon la revendication 1, dans laquelle 10 %, par exemple 30 %, de préférence 70 % ou même la totalité du premier écoulement d'eau est dirigé vers les cendres.

6. Centrale thermique selon l'une quelconque des revendications 1 à 5, dans laquelle le premier écoulement d'eau est divisé en deux écoulements dont l'un est dirigé vers les cendres et l'autre est dirigé vers le combustible.

7. Centrale thermique selon l'une quelconque des revendications 1 à 6, comprenant également une boucle de recirculation pour faire recirculer dans le système de séparation de particules le deuxième écoulement d'eau produit par le système de séparation de particules.

8. Centrale thermique selon la revendication 7, dans laquelle la boucle de recirculation comprend un filtre, tel qu'un filtre à membrane, pour produire, par filtration du deuxième écoulement d'eau, un troisième écoulement d'eau possédant une teneur en particules (kg/m3) inférieure à celle du deuxième écoulement d'eau.

9. Centrale thermique selon la revendication 7 ou 8, dans laquelle la boucle de recirculation comprend un échangeur de chaleur pour refroidir le deuxième écoulement d'eau.

10. Centrale thermique selon l'une quelconque des revendications 7 à 9, dans laquelle la boucle de recirculation comprend un raccord pour diriger une fraction du deuxième écoulement d'eau vers un système d'humidification d'air afin d'humidifier de l'air devant être utilisé dans un réacteur thermique.

11. Centrale thermique selon la revendication 10, dans laquelle le raccord pour diriger une fraction du deuxième écoulement d'eau vers un système d'humidification d'air est disposé en aval de l'échangeur de chaleur.

12. Centrale thermique selon la revendication 10, dans laquelle le raccord pour diriger une fraction du deuxième écoulement d'eau vers un système d'humidification d'air est disposé en amont de l'échangeur de chaleur.
